# EUROPÄISCHE PATENTSCHRIFT

(11) **EP 3 334 398 B1**
(45) Veröffentlichungstag und Bekanntmachung des Hinweises auf die Patenterteilung: **26.12.2018**
(21) Anmeldenummer: 16751283.9
(22) Anmeldetag: 09.08.2016
(51) Int. Cl.: A61G 13/02

(54) **VORRICHTUNG UND VERFAHREN ZUM ANSTEUERN MINDESTENS EINER ANTRIEBSEINRICHTUNG EINES OPERATIONSTISCHES**
DEVICE AND METHOD FOR CONTROLLING AT LEAST ONE DRIVE MECHANISM OF AN OPERATING TABLE
DISPOSITIF ET PROCÉDÉ DE COMMANDE D'UN SYSTÈME D'ENTRAÎNEMENT D'UNE TABLE D'OPÉRATION

(30) Priorität: 10.08.2015 DE 102015113110
(43) Veröffentlichungstag der Anmeldung: 20.06.2018
(73) Patentinhaber: Maquet GmbH, 76437 Rastatt (DE)
(72) Erfinder: GRAF, Heiko, 76744 Wörth (DE); JÖRGER, Matthias, 77855 Achern (DE); BÖSKE, Winfried, 76135 Karlsruhe (DE)
(74) Vertreter: Zacco GmbH
(86) Internationale Anmeldenummer: PCT/EP2016/068972
(87) Internationale Veröffentlichungsnummer: WO 2017/025541

(56) Entgegenhaltungen:
- EP-A1- 1 785 119
- WO-A1-96/26615
- DE-A1- 19 929 907

## Beschreibung

Die Erfindung betrifft eine Vorrichtung und ein Verfahren zum Ansteuern mindestens einer Antriebseinrichtung eines Operationstisches. Die Vorrichtung ist derart ausgebildet, dass die Antriebseinrichtung mit Hilfe einer Bedieneinheit unmittelbar ansteuerbar ist.

Aus dem Stand der Technik ist eine "Override"(Vorrang)-Bedieneinheit für Operationstische bekannt, die fest in die Operationstischsäule des Operationstisches integriert ist. Die Override-Bedieneinheit erhöht die Verfügbarkeit des Operationstisches, indem sie eine Ansteuerung von Verstellantrieben des Operationstisches ermöglicht, die unter bestimmten Umständen über andere Bedieneinheiten zum Bedienen des Operationstisches nicht mehr zur Verfügung stehen. Dies ist beispielsweise dann der Fall, wenn bestimmte Fehler in einer elektronischen Steuereinheit des Operationstisches vorliegen, oder wenn die weiteren Bedieneinheiten, wie z.B. ein Kabelbediengerät oder eine Infrarotfernbedienung, defekt oder nicht verfügbar sind.

Die Ansteuerung mindestens eines Aktors bzw. einer Antriebseinrichtung des Operationstisches mit Hilfe der Override-Bedieneinheit gemäß dem Stand der Technik hat den Nachteil, dass, um eine hohe Verfügbarkeit des Operationstisches sicherzustellen, die anzusteuernden Aktoren unabhängig von der Software der Steuereinheit des Operationstisches angesteuert werden. Dies hat zur Folge, dass Bedienfunktionen, die mit Hilfe dieser Software realisiert werden, wie z.B. eine Kollisionsüberwachung von mit Hilfe der Aktoren bewegbaren Komponenten des Operationstisches, nicht aktiv sind, wenn der Operationstisch mit Hilfe der Override-Bedieneinheit bedient wird.

Insbesondere existiert gemäß dem Stand der Technik eine sogenannte passive Override-Ansteuerung. Bei dieser passiven Override-Ansteuerung erfolgt eine direkte Ansteuerung der anzusteuernden Aktoren, wie beispielsweise eines Aktors einer Hydraulikpumpe oder eines Hydraulikventils des Operationstisches, ohne die Verarbeitung von Eingangssteuersignalen der Override-Bedieneinheit durch einen eine entsprechende Steuersoftware abarbeitenden Mikrocontroller. Dies ermöglicht zwar eine hohe Verfügbarkeit des Operationstisches, da die Bedienung des Operationstisches auch bei bestimmten Fehlerfällen über die Override-Bedieneinheit möglich ist. Jedoch ist dabei keine Kollisionsüberwachung der mit Hilfe der Aktoren bewegbaren Komponenten des Operationstisches möglich. Ferner ist bei der passiven Override-Ansteuerung keine Kommunikation zwischen der Override-Bedieneinheit und dem Mikrocontroller möglich, so dass ein Aktor unterschiedliche Ansteuersignale von der Override-Bedieneinheit und der Steuereinheit mit dem Mikrocontroller erhalten kann. Darüber hinaus sind bei der passiven Override-Ansteuerung auch weitere Funktionen, wie z.B. die Überprüfung der Kippstabilität des Operationstisches, das Erfassen von "Life-Cycle"-Daten (d.h. unter anderem das Abspeichern von Informationen darüber, wann und wie oft eine bestimmte Bedienfunktion von einem Benutzer aktiviert wurde) etc., nicht möglich.

Die WO 96/26615 A1 beschreibt eine Hängebedienungstafel mit Sicherheitsmerkmalen für eine Patientenhandhabungsvorrichtung.

Die EP 1 785 119 A1 offenbart eine Einrichtung zum Verstellen eines Operationstischs.

Ausgehend von dem bekannten Stand der Technik ist es Aufgabe der Erfindung, eine Vorrichtung zum Ansteuern mindestens einer Antriebseinrichtung eines Operationstisches anzugeben, die auch bei einer Fehlfunktion ihrer Steuereinheit eine hohe Verfügbarkeit des Operationstisches und gleichzeitig eine Überprüfung der unmittelbaren Ansteuerung der Antriebseinrichtung ermöglicht.

Diese Aufgabe wird durch eine Vorrichtung mit den Merkmalen des Anspruchs 1 und ein Verfahren mit den Merkmalen des Anspruchs 16 gelöst. Vorteilhafte Weiterbildungen sind in den abhängigen Ansprüchen angegeben.

Durch eine Vorrichtung mit den Merkmalen des Anspruchs 1 werden auch bei einer Fehlfunktion der Steuereinheit der Vorrichtung eine hohe Verfügbarkeit des Operationstisches und gleichzeitig eine Überprüfung der unmittelbaren Ansteuerung der Antriebseinrichtung erreicht, da die Antriebseinrichtung mit Hilfe eines zweiten Eingangssteuersignals unmittelbar ansteuerbar ist. Ferner empfängt die Steuereinheit das zweite Eingangssteuersignal oder ein auf dem zweiten Eingangssteuersignal basierendes Signal. Vorzugsweise ist die Vorrichtung derart ausgebildet, dass das zweite Eingangssteuersignal Vorrang vor dem ersten Eingangssteuersignal hat. Somit kann eine Vorrang-Ansteuerung realisiert werden, bei der die Steuereinheit das mit Hilfe einer Override-Bedieneinheit zuführbare zweite Eingangssteuersignal oder das auf dem zweiten Eingangssteuer-signal basierende Signal mitlesen kann, um gegebenenfalls eine Warnung, insbesondere eine Kollisionswarnung, auszugeben. Gleichzeitig kann bei dieser Vorrang-Ansteuerung verhindert werden, dass die Steuereinheit in die unmittelbare Ansteuerung der Antriebseinrichtung eingreifen kann, wenn die Bedienung mit Hilfe der Override-Bedieneinheit erfolgt. Dadurch kann einerseits auch bei einer Fehlfunktion der Steuereinheit eine hohe Verfügbarkeit des Operationstisches erreicht werden, und andererseits kann gleichzeitig die Überprüfung der unmittelbaren Ansteuerung der Antriebseinrichtung erreicht werden.

Vorzugsweise wird es auch bei dieser Vorrang-Ansteuerung ermöglicht, mit Hilfe der Steuereinheit eine Kollisionsüberwachung zur Verhinderung von oder zur Warnung vor einer Kollision einer mit
Hilfe der Antriebseinrichtung bewegbaren Komponente des Operationstisches mit einer anderen Komponente des Operationstisches oder mit der Umgebung, insbesondere mit dem Fußboden, durchzuführen. Darüber hinaus ist mit dieser Vorrang-Ansteuerung eine Kommunikation zwischen der Override-Bedieneinheit und der Steuereinheit möglich, indem die Steuereinheit das zweite Eingangssteuersignal empfängt. Vorzugsweise wird die mit Hilfe des Ausgangssteuersignals der Steuereinheit durchführbare Ansteuerung der Antriebseinrichtung automatisch gesperrt, wenn die Bedienung mit Hilfe der Override-Bedieneinheit erfolgt.

Vorzugsweise ist die Antriebseinrichtung mit Hilfe des zweiten Eingangssteuersignals unmittelbar ansteuerbar, indem die Vorrichtung die Antriebseinrichtung mit Hilfe des zweiten Eingangssteuersignals unter Umgehung der Steuereinheit ansteuert. Somit ist die mit Hilfe des zweiten Eingangssteuersignals durchgeführte unmittelbare Ansteuerung der Antriebseinrichtung dadurch gekennzeichnet, dass sie von der Steuereinheit nicht beeinflusst werden kann. Die unmittelbare Ansteuerung kann beispielsweise über eine fest verdrahtete Ansteuerung der Antriebseinrichtung mit Hilfe der Override-Bedieneinheit erfolgen, indem die Bedienelemente der Override-Bedieneinheit über Drähte und gegebenenfalls Feldeffekttransistoren (FET) oder sonstige Schalter mit der Antriebseinrichtung fest verdrahtet (hard wired) sind. Vorzugsweise umfasst die Antriebseinrichtung einen Aktor. Der Aktor kann insbesondere ein Elektromotor, ein Ventil oder eine Hydraulikpumpe sein. Ferner kann die Antriebseinrichtung auch eine oder mehrere dem Aktor vorgeschaltete Signalverarbeitungskomponenten, wie z.B. ein PWM-(Pulsweitenmodulation)-Modul und/oder einen DC/DC-Wandler umfassen. Unter der unmittelbaren Ansteuerung der Antriebseinrichtung wird insbesondere eine Ansteuerung derselben verstanden, ohne dass diese Ansteuerung durch eine Steuersoftware der Steuereinheit beeinflusst werden kann.

Vorzugsweise unterbricht die Vorrichtung bei einer Fehlfunktion der Steuereinheit die mit Hilfe des Ausgangssteuersignals durchgeführte Ansteuerung der Antriebseinrichtung. Somit kann verhindert werden, dass das mit Hilfe einer Standard-Bedieneinheit zuführbare erste Eingangssteuersignal bei einer Fehlfunktion der Steuereinheit an die Antriebseinrichtung weitergeleitet wird. Vorzugsweise unterbricht die Vorrichtung bei einer Fehlfunktion der Steuereinheit die mit Hilfe des zweiten Eingangssteuersignals durchführbare unmittelbare Ansteuerung der Antriebseinrichtung nicht. Somit kann sichergestellt werden, dass das mit Hilfe der Override-Bedieneinheit zuführbare zweite Eingangssteuersignal auch bei einer Fehlfunktion der Steuereinheit eine gewünschte Ansteuerung der Antriebseinrichtung bewirkt. Dadurch wird erreicht, dass bei einer Fehlfunktion der Steuereinheit nur die mit Hilfe des zweiten Eingangssteuersignals durchgeführte unmittelbare Ansteuerung der Antriebseinrichtung weiterhin möglich ist, während die mit Hilfe des Ausgangssteuersignals der Steuereinheit durchgeführte, möglicherweise fehlerhafte Ansteuerung der Antriebseinrichtung verhindert wird. Daraus resultiert insbesondere ein zuverlässiger Betrieb der Vorrang-Ansteuerung.

Vorzugsweise ist die Steuereinheit ausgebildet, um basierend auf dem ersten Eingangssteuersignal und basierend auf dem zweiten Eingangssteuersignal jeweils eine Kollisionsüberwachung zur Verhinderung von oder zur Warnung vor einer Kollision einer mit Hilfe der Antriebseinrichtung bewegbaren Komponente des Operationstisches mit einer anderen Komponente des Operationstisches oder der Umgebung durchzuführen. Somit kann bei der Vorrang-Ansteuerung eine auf dem ersten bzw. zweiten Eingangssteuersignal basierende Kollisionsüberwachung durchgeführt werden, mit deren Hilfe eine Sicherheitsfunktion der Vorrichtung ausgelöst werden kann.

Vorzugsweise ist die Steuereinheit ausgebildet, um bei der durchgeführten Kollisionsüberwachung mindestens ein erstes Warnsignal zu erzeugen, wenn bei der Ansteuerung der Antriebseinrichtung ein Mindestabstand einer mit Hilfe der Antriebseinrichtung bewegbaren Komponente des Operationstisches zu einer anderen Komponente des Operationstisches oder zu der Umgebung erreicht oder unterschritten wird. Somit kann die Sicherheitsfunktion der Vorrichtung ausgelöst werden, wenn ein voreingestellt gespeichertes Kriterium für die Kollisionsüberwachung erfüllt ist. Dabei entspricht das Kriterium insbesondere der Bedingung zur Erzeugung des ersten Warnsignals.

Vorzugsweise ist die Steuereinheit ausgebildet, um bei der durchgeführten Kollisionsüberwachung zu überprüfen, ob bei der Ansteuerung der Antriebseinrichtung eine einzustellende Positionsänderung einer mit Hilfe der Antriebseinrichtung bewegbaren Komponente des Operationstisches relativ zu einer Position einer anderen Komponente des Operationstisches zulässig oder nicht zulässig ist, und in Abhängigkeit des Ergebnisses dieser Überprüfung mindestens ein erstes Warnsignal zu erzeugen. Somit kann die Erzeugung des mindestens einen ersten Warnsignals insbesondere dann erfolgen, wenn eine Kollision von relativ zueinander bewegbaren Komponenten des Operationstisches oder eine Kollision einer bewegbaren Komponente des Operationstisches mit der Umgebung droht oder unmittelbar bevorsteht, insbesondere dann, wenn ein Mindestabstand erreicht oder unterschritten wurde.

Vorzugsweise ist das erste Warnsignal ein optisches oder ein akustisches Warnsignal. Somit kann bei einer drohenden oder unmittelbar bevorstehenden Kollision der bewegbaren Komponenten des Operationstisches ein optisches oder ein akustisches Warnsignal zur Warnung eines Benutzers ausgegeben werden.

Vorzugsweise ist die Steuereinheit ausgebildet, um bei der durchgeführten Kollisionsüberwachung ein Sperrsignal für eine Sicherheitsfreigabeeinheit zu erzeugen, wenn bei der Ansteuerung der Antriebseinrichtung ein Mindestabstand einer mit Hilfe der Antriebseinrichtung bewegbaren Komponente des Operationstisches zu einer anderen Komponente des Operationstisches oder zu der Umgebung erreicht oder unterschritten wird. Dabei ist insbesondere die mit Hilfe des zweiten Eingangssteuersignals durchgeführte unmittelbare Ansteuerung der Antriebseinrichtung weiterhin möglich. Somit kann die Sicherheitsfunktion der Vorrichtung in Form der Erzeugung eines Sperrsignals ausgelöst werden, wenn das voreingestellt gespeicherte Kriterium für die Kollisionsüberwachung erfüllt ist. Dabei wird die mit Hilfe des zweiten Eingangssteuersignals durchgeführte unmittelbare Ansteuerung der Antriebseinrichtung auch bei der Erzeugung des Sperrsignals nicht unterbrochen.

Vorzugsweise ist die Steuereinheit ausgebildet, um bei der durchgeführten Kollisionsüberwachung mindestens ein Sensorsignal zu empfangen, wobei das Sensorsignal jeweils eine Position und/oder eine Positionsänderung einer mit Hilfe der Antriebseinrichtung bewegbaren Komponente des Operationstisches angibt. Somit kann die Kollisionsüberwachung mit Hilfe von empfangenen Sensorsignalen durchgeführt werden, die von verschiedenen den bewegbaren Komponenten des Operationstisches zugeordneten Sensoren erfasst wurden.

Vorzugsweise umfasst die Sicherheitsfreigabeeinheit eine erste Sperreinheit zum Sperren des Ausgangssteuersignals in Abhängigkeit eines von der Steuereinheit erzeugten Sperrsignals. Somit kann das Sperrsignal dazu verwendet werden, um die Ansteuerung der Antriebseinrichtung mit Hilfe des Ausgangssteuersignals zu verhindern.

Vorzugsweise ist die erste Sperreinheit ausgebildet, um in einem ersten Schaltzustand das Ausgangssteuersignal an die Antriebseinrichtung weiterzuleiten und in einem zweiten Schaltzustand die Weiterleitung des Ausgangssteuersignals zu unterbrechen. Somit kann sichergestellt werden, dass die Ansteuerung der Antriebseinrichtung mit Hilfe des Ausgangssteuersignals verhindert wird, wenn die erste Sperreinheit das Sperrsignal empfängt.

Vorzugsweise umfasst die Sicherheitsfreigabeeinheit eine zweite Sperreinheit zum Sperren des zweiten Eingangssteuersignals. Die zweite Sperreinheit ist ausgebildet, um in einem ersten Schaltzustand das zweite Eingangssteuersignal an die Antriebseinrichtung weiterzuleiten und in einem zweiten Schaltzustand die Weiterleitung des zweiten Eingangssteuersignals zu unterbrechen. Ferner wird die zweite Sperreinheit nach dem Hochfahren der Vorrichtung in den ersten Schaltzustand geschaltet und verbleibt auch bei einer Fehlfunktion der Steuereinheit in diesem ersten Schaltzustand. Dies kann insbesondere durch eine Selbsthaltefunktion realisiert werden, bei der die zweite Sperreinheit immer in ihrem ersten Schaltzustand verbleibt. Dadurch wird erreicht, dass die mit Hilfe des zweiten Eingangssteuersignals durchgeführte unmittelbare Ansteuerung der Antriebseinrichtung unabhängig von einer Fehlfunktion der Steuereinheit oder dem Erzeugen des Sperrsignals nicht ausgeschaltet wird.

Vorzugsweise ist in der Vorrichtung das erste Eingangssteuersignal über eine mit der Vorrichtung koppelbare erste Bedieneinheit zuführbar. Ferner ist der Vorrichtung das zweite Eingangssteuersignal über eine mit der Vorrichtung koppelbare zweite Bedieneinheit zuführbar. Somit können eine erste Bedieneinheit, insbesondere eine Standard-Bedieneinheit, und eine zweite Bedieneinheit, insbesondere eine Override-Bedieneinheit, vorgesehen sein, mit deren Hilfe das erste und zweite Eingangssteuersignal der Vorrichtung unabhängig voneinander zugeführt werden können. Vorzugsweise ist die erste Bedieneinheit über eine drahtlose Schnittstelle, wie eine IR(Infrarot)-Schnittstelle, mit der Vorrichtung koppelbar. Ferner kann die zweite Bedieneinheit mit der Vorrichtung fest verdrahtet sein.

Beispielsweise umfasst die Vorrichtung ein Schaltelement, das ausgebildet ist, um in Abhängigkeit des zweiten Eingangssteuersignals die Weiterleitung des Ausgangssteuersignals der Steuereinheit zum Ansteuern der Antriebseinrichtung, insbesondere eines Aktors, zu unterbrechen.

Beispielsweise umfasst die Vorrichtung eine Sicherheitsfreigabeeinheit, die ausgebildet ist, um in Abhängigkeit des zweiten Eingangssteuersignals oder in Abhängigkeit eines Freigabesignals der Steuereinheit die Antriebseinrichtung, insbesondere ein PWM-(Pulsweitenmodulation)-Modul und/oder einen DC/DC-Wandler, mit einer Leistungsversorgungseinheit (PSU) zu verbinden.

Vorzugsweise empfängt die Steuereinheit bzw. ein auch als "Master-Mikrocontroller" bezeichnetes Steuereinheitsmodul das zweite Eingangssteuersignal oder ein auf dem zweiten Eingangssteuersignal basierendes Signal. Bei einer Bedienung mit Hilfe der Override-Bedieneinheit kann die Steuereinheit jedoch die mit Hilfe des Ausgangssteuersignals der Steuereinheit durchführbare Ansteuerung des Aktors nicht mehr beeinflussen. Das zweite Eingangssteuersignal bewirkt vorzugsweise die Freischaltung einer Sicherheitsfreigabeeinheit und aktiviert beispielsweise über eine Endstufe die den Aktor umfassende Antriebseinrichtung.

Beispielsweise kann die Steuereinheit Kollisionen insbesondere dann nicht verhindern, wenn die Bedienung mit Hilfe der Override-Bedieneinheit erfolgt. In diesem Fall kann die Steuereinheit nur ein Warnsignal zur Ausgabe einer Kollisionswarnung an den Benutzer erzeugen.

Darüber hinaus können mit Hilfe der erfindungsgemäßen Vorrichtung auch weitere Funktionen, wie z.B. die Warnung vor einer Kippgefahr, das Erfassen von "Life-Cycle"-Daten etc., realisiert werden. Dabei kann die Warnung vor der Kippgefahr insbesondere dann ausgegeben werden, wenn die Kippstabilität des Operationstisches vergleichsweise gering ist.

Ferner schafft die vorliegende Erfindung ein Verfahren zum Ansteuern mindestens einer Antriebseinrichtung eines Operationstisches. Das Verfahren umfasst ein Bereitstellen eines Ausgangssteuersignals basierend auf zumindest einem ersten Eingangssteuersignal mit Hilfe einer Steuereinheit, ein Ansteuern der Antriebseinrichtung mit Hilfe des Ausgangssteuersignals, und ein unmittelbares Ansteuern der Antriebseinrichtung mit Hilfe eines zweiten Eingangssteuersignals. Das Verfahren ist dadurch gekennzeichnet, dass die Steuereinheit das zweite Eingangssteuersignal oder ein auf dem zweiten Eingangssteuersignal basierendes Signal empfängt.

Weitere Merkmale und Vorteile der Erfindung ergeben sich aus der nachfolgenden Beschreibung, die die Erfindung anhand von Ausführungsbeispielen im Zusammenhang mit den beigefügten Figuren näher erläutert.

Es zeigen:
- Figur 1: ein Blockdiagramm einer Vorrichtung zum Ansteuern mindestens einer Antriebseinrichtung eines Operationstisches mit einer Steuereinheit gemäß einem Ausführungsbeispiel;
- Figur 2: ein Blockdiagramm der Vorrichtung nach Figur 1 mit einer Sicherheitsfreigabeeinheit gemäß einem Ausführungsbeispiel;
- Figur 3: ein Blockdiagramm der Vorrichtung nach Figur 1 mit einer ersten Bedieneinheit und einer zweiten Bedieneinheit gemäß einem Ausführungsbeispiel;
- Figur 4: eine schematische Darstellung eines Operationstisches mit der Vorrichtung nach Figur 1 gemäß einem Ausführungsbeispiel;
- Figur 5: eine schematische Darstellung der zweiten Bedieneinheit nach Figur 3 mit mehreren beispielhaften Bedienfeldern und Bedienelementen;
- Figur 6: eine schematische, perspektivische Darstellung eines Operationstisches mit der zweiten Bedieneinheit nach Figur 3 und mehreren mit Hilfe von Aktoren bewegbaren Komponenten des Operationstisches gemäß einem Ausführungsbeispiel;
- Figur 7: ein Blockdiagramm einer Vorrichtung zum Ansteuern mindestens eines Aktors eines Operationstisches mit einer Steuereinheit gemäß einem weiteren Ausführungsbeispiel; und
- Figur 8: ein Blockdiagramm einer Vorrichtung zum Ansteuern mindestens eines Aktors eines Operationstisches mit einer Steuereinheit gemäß einem weiteren Ausführungsbeispiel.

Bevor im Folgenden die vorliegende Erfindung anhand der Figuren näher erläutert wird, wird darauf hingewiesen, dass in den nachfolgend dargestellten Ausführungsbeispielen gleiche Elemente oder funktionell gleiche Elemente in den Figuren mit den gleichen Bezugszeichen versehen sind. Eine Beschreibung von Elementen mit gleichen Bezugszeichen ist daher gegenseitig austauschbar und/oder in den verschiedenen Ausführungsbeispielen aufeinander anwendbar.

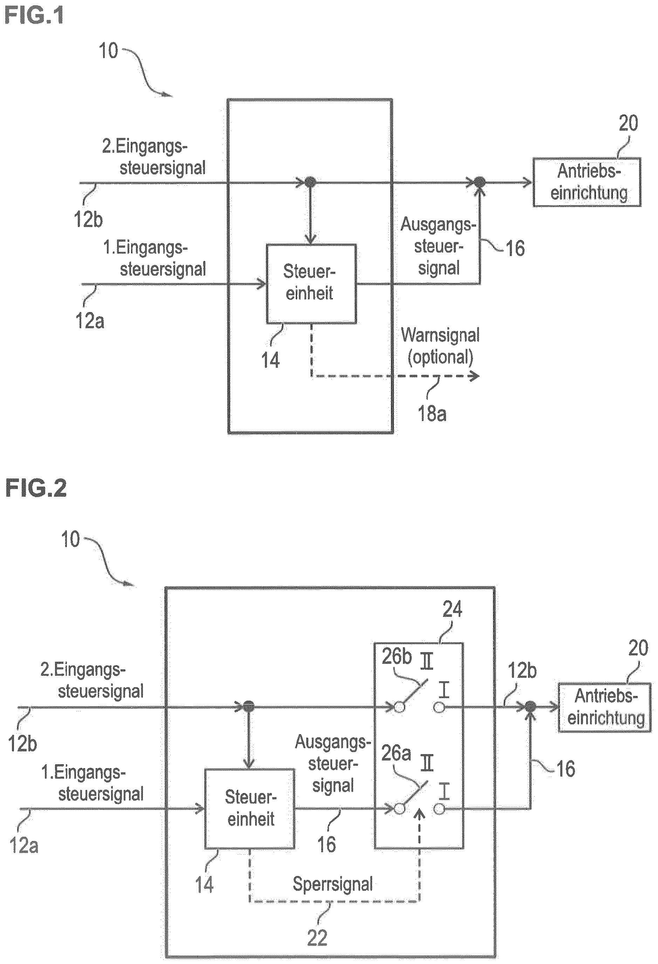

Figur 1 zeigt ein Blockdiagramm einer Vorrichtung 10 zum Ansteuern mindestens einer Antriebseinrichtung 20 eines Operationstisches mit einer Steuereinheit 14 gemäß einem Ausführungsbeispiel. Wie in Figur 1 gezeigt, empfängt die Vorrichtung 10 ein erstes Eingangssteuersignal 12a und ein zweites Eingangssteuersignal 12b und leitet diese an die Steuereinheit 14 weiter. Die Steuereinheit 14 dient zur Bereitstellung eines Ausgangssteuersignals 16 basierend auf dem ersten Eingangssteuersignal 12a. Ferner kann die Steuereinheit 14 zur Erzeugung eines Warnsignals 18a dienen. Dabei empfängt die Steuereinheit 14 insbesondere das zweite Eingangssteuersignal 12b. Mit Hilfe des Warnsignals 18a kann ein Benutzer bei einer drohenden oder unmittelbar bevorstehenden Kollision von bewegbaren Komponenten des Operationstisches gewarnt werden.

Alternativ oder zusätzlich können mit Hilfe der Steuereinheit 14 auch weitere Funktionen der Vorrichtung 10 zur Ausgabe einer Warnung an den Benutzer realisiert werden. Diese weiteren Funktionen der Vorrichtung 10 umfassen beispielsweise eine Warnung vor einer Kippgefahr bei einer vergleichsweise geringen Kippstabilität des Operationstisches oder eine Warnung in Abhängigkeit von erfassten "Life-Cycle"-Daten, d.h. in Abhängigkeit von abgespeicherten Informationen darüber, wann und wie oft eine bestimmte Bedienfunktion von dem Benutzer aktiviert wurde. Mit anderen Worten, es ist eine mögliche Anwendung, dass der Benutzer aufgrund von gesammelten Life-Cycle-Daten gewarnt wird. Vorzugsweise werden die Life-Cycle-Daten jedoch nicht zur Warnung des Benutzers, sondern nur zu "Service"-Zwecken bzw. informativen Zwecken (d.h. nur zur Information des Benutzers) gespeichert.

Bei dem in Figur 1 gezeigten Ausführungsbeispiel wird die Antriebseinrichtung 20 mit Hilfe des Ausgangssteuersignals 16 angesteuert. Ferner wird die Antriebseinrichtung 20 mit Hilfe des zweiten Eingangssteuersignals 12b unmittelbar angesteuert. Dabei hat die mit Hilfe des zweiten Eingangssteuersignals 12b durchgeführte unmittelbare Ansteuerung der Antriebseinrichtung 20 Vorrang vor der mit Hilfe des Ausgangssteuersignals 16 durchgeführten Ansteuerung der Antriebseinrichtung 20. Somit kann eine Vorrang-Ansteuerung der Antriebseinrichtung 20 des Operationstisches realisiert werden, die auch dann noch funktioniert, wenn die Steuereinheit ausgefallen ist.

Figur 2 zeigt ein Blockdiagramm der Vorrichtung 10 nach Figur 1 mit einer Sicherheitsfreigabeeinheit 24 gemäß einem Ausführungsbeispiel. Bei dem in Figur 2 gezeigten Ausführungsbeispiel umfasst die Vorrichtung 10 die Steuereinheit 14 und die Sicherheitsfreigabeeinheit 24. Die Steuereinheit 14 dient zur Bereitstellung des Ausgangssteuersignals 16 basierend auf dem ersten Eingangssteuersignal 12a. Ferner kann die Steuereinheit 14 zur Erzeugung eines Sperrsignals 22 für die Sicherheitsfreigabeeinheit 24 dienen. Wie in Figur 2 gezeigt, umfasst die Sicherheitsfreigabeeinheit 24 eine erste Sperreinheit 26a und eine zweite Sperreinheit 26b. Die erste Sperreinheit 26a dient zum Sperren des Ausgangssteuersignals 16 in Abhängigkeit des von der Steuereinheit 14 erzeugten Sperrsignals 22. Ferner dient die zweite Sperreinheit 26b zum Sperren des zweiten Eingangssteuersignals 12b. In Figur 2 ist schematisch dargestellt, dass die erste und zweite Sperreinheit 26a, 26b jeweils einen ersten Schaltzustand (I) und einen zweiten Schaltzustand (II) haben, zwischen denen umgeschaltet werden kann.

Vorzugsweise wird in dem ersten Schaltzustand I der ersten Sperreinheit 26a das Ausgangssteuersignal 16 an die Antriebseinrichtung 20 weitergeleitet. Ferner wird in dem zweiten Schaltzustand II der ersten Sperreinheit 26a die Weiterleitung des Ausgangssteuersignals 16 an die Antriebseinrichtung 20 unterbrochen. Dabei wechselt die erste Sperreinheit 26a von dem ersten Schaltzustand I in den zweiten Schaltzustand II, wenn die erste Sperreinheit 26a das von der Steuereinheit 14 erzeugte Sperrsignal 22 empfängt.

In dem ersten Schaltzustand I der zweiten Sperreinheit 26b wird das zweite Eingangssteuersignal 12b an die Antriebseinrichtung 20 weitergeleitet. Ferner wird in dem zweiten Schaltzustand II der zweiten Sperreinheit 26b die Weiterleitung des zweiten Eingangssteuersignals 12b unterbrochen. Vorzugsweise wird die zweite Sperreinheit 26b nach dem Hochfahren der Vorrichtung 10 in den ersten Schaltzustand I geschaltet und verbleibt auch bei einer Fehlfunktion der Steuereinheit 14 in diesem ersten Schaltzustand I. Dies kann insbesondere durch eine Selbsthaltefunktion der zweiten Sperreinheit 26b realisiert werden.

Die in Figur 1 und 2 schematisch dargestellte Erzeugung des Warnsignals 18a bzw. des Sperrsignals 22 für die Sicherheitsfreigabeeinheit 24 kann insbesondere bei einer unter Verwendung der Steuereinheit 14 durchgeführten Kollisionsüberwachung einer mit Hilfe der Antriebseinrichtung 20 bewegbaren Komponente des Operationstisches durchgeführt werden. Dabei führt die Steuereinheit 14 die Kollisionsüberwachung basierend auf dem ersten und dem zweiten Eingangssteuersignal 12a, 12b aus.

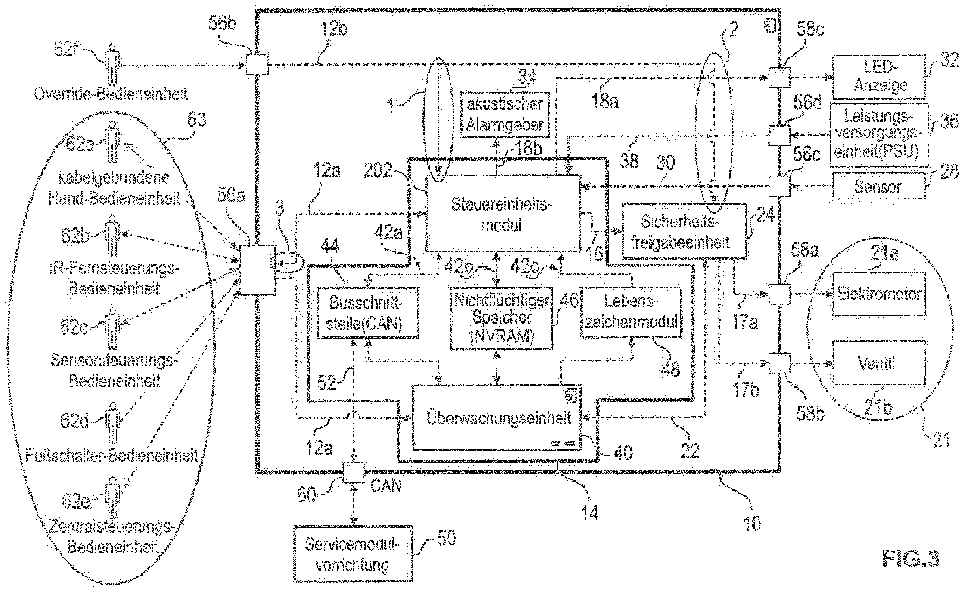

Figur 3 zeigt ein Blockdiagramm der Vorrichtung 10 nach Figur 1 mit einer ersten Bedieneinheit 62a bis 62e und einer zweiten Bedieneinheit 62f. Bei dem in Figur 3 gezeigten Ausführungsbeispiel umfasst die Vorrichtung 10 die Steuereinheit 14 und die Sicherheitsfreigabeeinheit 24. Insbesondere umfasst die in Figur 3 gezeigte Steuereinheit 14 ein Steuereinheitsmodul 202 und eine Überwachungseinheit 40. Die Überwachungseinheit 40 dient zur Ermittlung einer Fehlfunktion der Steuereinheit 14. Ferner kann die Überwachungseinheit 40 das Sperrsignal 22 für die Sicherheitsfreigabeeinheit 24 bereitstellen. Wie in Figur 3 gezeigt, sind das Steuereinheitsmodul 202 und die Überwachungseinheit 40 über mehrere Kommunikationspfade 42a bis 42c miteinander gekoppelt. Der erste Kommunikationspfad 42a umfasst eine Busschnittsstelle 44 (CAN). Der zweite Kommunikationspfad 42b umfasst einen nichtflüchtigen Speicher 46 (NVRAM). Der dritte Kommunikationspfad 42c umfasst ein "Lebenszeichen"-Modul 48 ("Sign of Life"). Die Busschnittsstelle 44, der nichtflüchtige Speicher 46 und das Lebenszeichen-Modul 48 dienen zur Übertragung bzw. Speicherung von Signalinformationen, die zwischen dem Steuereinheitsmodul 202 und der Überwachungseinheit 40 ausgetauscht werden können. Vorzugsweise umfassen diese Signalinformationen eine Information über eine Fehlfunktion der Steuereinheit 14.

Bei dem in Figur 3 gezeigten Ausführungsbeispiel empfängt die Überwachungseinheit 40 das erste Eingangssteuersignal 12a. Ferner steuert die Überwachungseinheit 40 die Sicherheitsfreigabeeinheit 24 in Abhängigkeit einer über einen der Kommunikationspfade 42a bis 42c empfangenen Informationen über die Fehlfunktion der Steuereinheit 14. Vorzugsweise steuert die Überwachungseinheit 40 die Sicherheitsfreigabeeinheit 24 derart, dass bei einer Fehlfunktion der Steuereinheit 14 die mit Hilfe des Ausgangssteuersignals 16 durchgeführte Ansteuerung des Elektromotors 21a und des Ventils 21b unterbrochen wird, und dass die mit Hilfe des zweiten Eingangssteuersignals 12b durchgeführte unmittelbare Ansteuerung des Elektromotors 21a und des Ventils 21b nicht unterbrochen wird. Dabei dienen die Signalpfade 17a, 17b jeweils zur Weiterleitung des Ausgangssteuersignals 16 und des zweiten Eingangssteuersignals 12b an den Elektromotor 21a bzw. an das Ventil 21b. Ferner verlaufen die Signalpfade 17a, 17b durch entsprechende Ausgangsknoten 58a, 58b der Vorrichtung 10. Bei dem in Figur 3 gezeigten Ausführungsbeispiel umfasst die Antriebseinrichtung mehrere Aktoren 21, insbesondere den Elektromotor 21a und das Ventil 21b. Der Elektromotor 21a betreibt beispielsweise eine Hydraulikpumpe.

Bei dem Ausführungsbeispiel von Figur 3 ist die Vorrichtung 10 mit einer ersten Bedieneinheit 62a bis 62e und einer zweiten Bedieneinheit 62f gekoppelt. Die erste Bedieneinheit 62a bis 62e dient zur Zuführung des ersten Eingangssteuersignals 12a zu der Vorrichtung 10. Ferner dient die zweite Bedieneinheit 62f zur Zuführung des zweiten Eingangssteuersignals 12b zu der Vorrichtung 10. Die erste Bedieneinheit 62a bis 62e umfasst beispielsweise eine kabelgebundene Hand-Bedieneinheit 62a, eine IR-Fernsteuerungs-Bedieneinheit 62b, eine Sensorsteuerungs-Bedieneinheit 62c, eine Fußschalter-Bedieneinheit 62d oder eine Zentralsteuerungs-Bedieneinheit 62e. Dabei ist die erste Bedieneinheit 62a bis 62e über eine drahtlose oder kabelgebundene erste Schnittstelle 56a mit der Vorrichtung 10 gekoppelt. Vorzugsweise ist die kabelgebundene Hand-Bedieneinheit 62a mit der Vorrichtung 10 fest verdrahtet, während die IR-Fernsteuerungs-Bedieneinheit 62b, die Sensorsteuerungs-Bedieneinheit 62c, die Fußschalter-Bedieneinheit 62d und die Zentralsteuerungs-Bedieneinheit 62e über eine IR-Schnittstelle mit der Vorrichtung 10 gekoppelt sind. Die zweite Bedieneinheit 62f ist insbesondere eine Override-Bedieneinheit. Vorzugsweise ist die zweite Bedieneinheit 62f fest mit der Vorrichtung 10 verdrahtet. Wie in Figur 3 gezeigt, empfängt die Vorrichtung 10 das zweite Eingangssteuersignal 12b über einen Eingangsknoten 56b von der zweiten Bedieneinheit 62f.

Das zweite Eingangssteuersignal 12b wird von dem Steuereinheitsmodul 202 empfangen (Signalpfad 1). Ferner wird das zweite Eingangssteuersignal 12b von der Sicherheitsfreigabeeinheit 24 empfangen (Signalpfad 2). Der Signalpfad 1 dient zum Mitlesen des von der zweiten Bedieneinheit 62f zugeführten zweiten Eingangssteuersignals 12b mit Hilfe der Steuereinheit 14, um insbesondere eine Kollisionswarnung auszugeben. Ferner dient der Signalpfad 2 zur unmittelbaren Ansteuerung der Sicherheitsfreigabeeinheit 24 und zur unmittelbaren Ansteuerung der Aktoren 21, insbesondere des Elektromotors 21a und des Ventils 21b, mit Hilfe der zweiten Bedieneinheit 62f. Dabei wird unter der unmittelbaren Ansteuerung der Aktoren 21 insbesondere die unmittelbare Ansteuerung der Aktoren 21 unter Umgehung der Steuereinheit 14, d.h. unter Umgehung des Steuereinheitsmoduls 202 und der Überwachungseinheit 40, verstanden.

Die verschiedenen ersten Bedieneinheiten 62a bis 62e bilden insbesondere eine Gruppe 63 von ersten Bedieneinheiten. Gemäß dem Ausführungsbeispiel von Figur 3 empfängt das Steuereinheitsmodul 202 das erste Eingangssteuersignal 12a über eine vorzugsweise bidirektionale Kommunikationsverbindung 3 zwischen dem Steuereinheitsmodul 202 und der Gruppe 63 von ersten Bedieneinheiten. Die bidirektionale Kommunikationsverbindung 3 dient zur Ansteuerung der Aktoren 21 unter Verwendung des Steuereinheitsmoduls 202.

Bei dem in Figur 3 gezeigten Ausführungsbeispiel dient das Steuereinheitsmodul 202 zur Durchführung der auf dem ersten bzw. zweiten Eingangssteuersignal 12a, 12b basierenden Kollisionsüberwachung und zur Ausgabe der entsprechenden Kollisionswarnung. Wie in Figur 3 gezeigt, empfängt das Steuereinheitsmodul 202 über einen Eingangsknoten 56c der Vorrichtung ein von einem Sensor 28 erfasstes Sensorsignal 30. Vorzugsweise gibt das Sensorsignal 30 eine Position und/oder eine Positionsänderung einer mit Hilfe des Elektromotors 21a bewegbaren Komponente des Operationstisches an. Das Steuereinheitsmodul 202 überprüft insbesondere, ob die mit Hilfe des Sensors 28 erfasste Positionsänderung dieser bewegbaren Komponente des Operationstisches relativ zu einer Position einer anderen Komponente des Operationstisches zulässig oder nicht zulässig ist. Vorzugsweise ist die erfasste Positionsänderung der bewegbaren Komponente des Operationstisches nicht zulässig, wenn der Elektromotor 21a derart angesteuert wird, dass ein Mindestabstand der mit Hilfe des Elektromotors 21a bewegbaren Komponente des Operationstisches zu einer anderen Komponente des Operationstisches oder zu der Umgebung erreicht oder unterschritten wird. Für den Fall, dass die erfasste Positionsänderung nicht zulässig ist, erzeugt das Steuereinheitsmodul 202 vorzugsweise ein erstes optisches Warnsignal 18a und ein zweites akustisches Warnsignal 18b. Wie in Figur 3 gezeigt, kann das erste optische Warnsignal 18a über einen Ausgangsknoten 58c der Vorrichtung 10 an eine LED (Leuchtdiode)-Anzeige 32 weitergeleitet werden. Ferner kann das zweite akustische Warnsignal 18b an einen von der Vorrichtung 10 umfassten Alarmgeber 34 weitergeleitet werden. Die LED-Anzeige 32 und der akustische Alarmgeber 34 dienen zur Warnung des Benutzers bei einer drohenden oder unmittelbar bevorstehenden Kollision der mit Hilfe des Elektromotors 21a bewegbaren Komponente des Operationstisches.

Gemäß Figur 3 ist das Steuereinheitsmodul 202 vorzugsweise über einen durch einen Eingangsknoten 56d der Vorrichtung 10 verlaufenden Signalpfad 38 mit einer Leistungsversorgungseinheit 36 (PSU) gekoppelt. Die Leistungsversorgungseinheit 36 dient zur Versorgung des Steuereinheitsmoduls 202 mit Energie.

Ferner kann gemäß Figur 3 die Busschnittsstelle 44 (CAN) über einen durch einen Busknoten 60 der Vorrichtung 10 verlaufenden Signalpfad 52 mit einer Servicemodulvorrichtung 50 gekoppelt werden. Die Servicemodulvorrichtung 50 dient zur Konfiguration der Busschnittsstelle 44 in Abhängigkeit von Benutzereingaben.

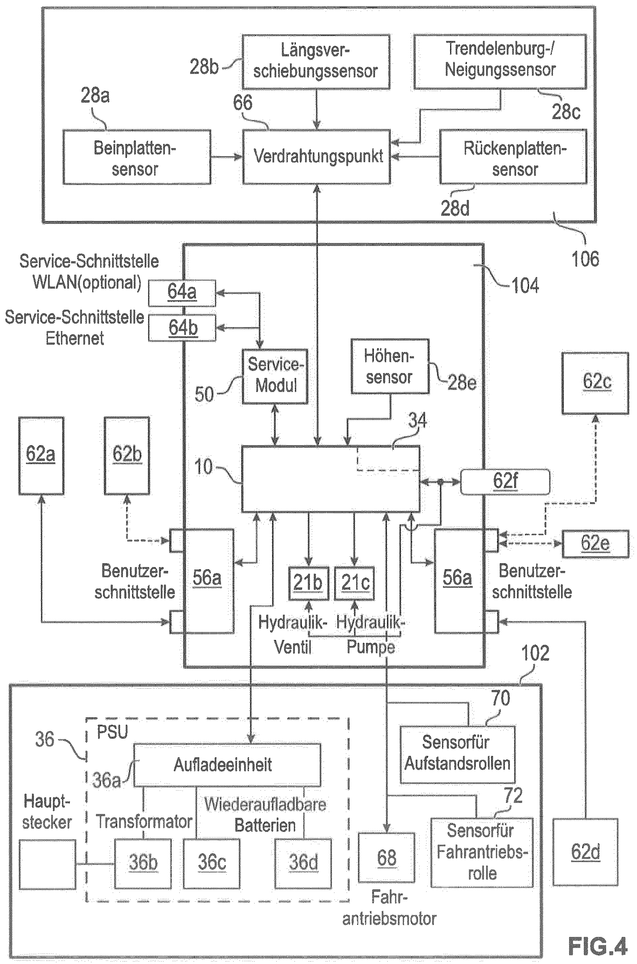

Figur 4 zeigt eine schematische Darstellung eines Operationstisches 100 mit der Vorrichtung 10 nach Figur 1 gemäß einem Ausführungsbeispiel. Wie in Figur 4 gezeigt, umfasst der Operationstisch 100 einen Operationstischfuß 102, eine Operationstischsäule 104 und eine Patientenlagerfläche 106. Bei dem in Figur 4 gezeigten Ausführungsbeispiel ist die Vorrichtung 10 nach Figur 1 in die Operationstischsäule 104 des Operationstisches 100 integriert. Die in die Operationstischsäule 104 integrierte Vorrichtung 10 mit der in Figur 4 nicht gezeigten Steuereinheit 14 und dem akustischen Alarmgeber 34 dient zur Ansteuerung des Hydraulikventils 21b und einer Hydraulikpumpe 21c des Operationstisches 100. Wie in Figur 4 schematisch dargestellt, umfasst die Operationstischsäule 104 die als IR-Schnittstelle ausgebildete erste Eingangsschnittstelle 56a zur Kopplung der ersten Bedieneinheit 62a bis 62d mit der Vorrichtung 10. Dabei dient die erste Eingangsschnittstelle 56a insbesondere zur Kopplung der kabelgebundenen Hand-Bedieneinheit 62a, der IR-Fernsteuerungs-Bedieneinheit 62b, der Sensorsteuerungs-Bedieneinheit 62c, der Fußschalter-Bedieneinheit 62d und der Zentralsteuerungs-Bedieneinheit 62e. Ferner umfasst die Operationstischsäule 104 die zweite Bedieneinheit 62f. Vorzugsweise ist die zweite Bedieneinheit 62f in die Operationstischsäule 104 integriert. Wie in Figur 4 schematisch dargestellt, ist die zweite Bedieneinheit 62f mit der Vorrichtung 10 gekoppelt. Ferner dient die zweite Bedieneinheit 62f zur unmittelbaren Ansteuerung des Hydraulikventils 21b und der Hydraulikpumpe 21c.

Gemäß Figur 4 umfasst die Operationstischsäule 104 die mit der Vorrichtung 10 koppelbare Servicemodulvorrichtung 50. Die Servicemodulvorrichtung 50 ist insbesondere mit einer ersten Schnittstelle 64a, beispielsweise eine WLAN-Schnittstelle, und mit einer zweiten Schnittstelle 64b, beispielsweise eine Ethernet-Schnittstelle, gekoppelt. Mit Hilfe der Servicemodulvorrichtung 50 kann der Benutzer die Steuereinheit 14 der Vorrichtung 10 entsprechend konfigurieren.

Gemäß Figur 4 ist die Vorrichtung 10 mit der in den Operationstischfuß 102 integrierten Leistungsversorgungseinheit 36 (PSU) verbunden. Die Leistungsversorgungseinheit 36 umfasst insbesondere eine Aufladeeinheit 36a, die über einen Transformator 36b mit einer zentralen Stromversorgung des Operationstisches 100 verbunden ist, und die zusätzlich mit aufladbaren Batterien 36c, 36d verbunden ist. Ferner kann gemäß Figur 4 die Vorrichtung 10 mit einem Fahrantriebsmotor 68, einem Sensor 70, der die Position von vier Aufstandsrollen detektiert, und einem Sensor 72, der die Position einer Fahrantriebsrolle detektiert, gekoppelt werden, wobei der Fahrantriebsmotor 68 und die Sensoren 70, 72 jeweils in den Operationstischfuß 102 integriert sind.

Bei dem Ausführungsbeispiel von Figur 4 ist die Vorrichtung 10 über eine in die Patientenlagerfläche 106 integrierte Koppelschnittstelle 66, insbesondere einen Verdrahtungspunkt 66, mit einem Beinplattensensor 28a, einem Längsverschiebungssensor 28b, einem "Trendelenburg"- bzw. Neigungssensor 28c und einem Rückenplattensensor 28d verbunden. Die Koppelschnittstelle 66 dient außerdem zur Verbindung von Ventilen, die sich in der Patientenlagerfläche 106 befinden, mit der Vorrichtung 10. Ferner kann ein mit der Vorrichtung 10 gekoppelter Höhensensor 28e in der Operationstischsäule 104 vorgesehen sein. Mit Hilfe dieser Sensoren 28a bis 28e können verschiedene Parameter bei der Bewegung der Komponenten des Operationstisches 100, insbesondere deren jeweilige Position und/oder Positionsänderung, erfasst und der Steuereinheit 14 der Vorrichtung 10 zugeführt werden.

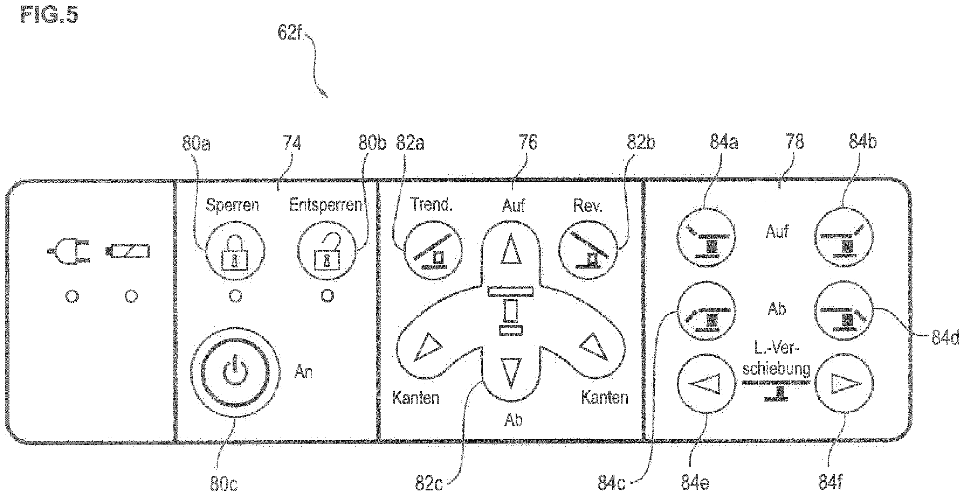

Figur 5 zeigt eine schematische Darstellung der zweiten Bedieneinheit 62f nach Figur 3 mit mehreren beispielhaften Bedienfeldern 74 bis 78 und Bedienelementen 80a bis 80c, 82a bis 82c bzw. 84a bis 84f. Vorzugsweise umfasst die zweite Bedieneinheit 62f eine Folientastatur. Dabei sind die Bedienelemente 80a bis 80c, 82a bis 82c und 84a bis 84f insbesondere in die Folientastatur integrierte

Tastenelemente zur Realisierung verschiedener Funktionen des Operationstisches. Mit Hilfe der Bedienelemente 80a, 80b kann beispielsweise eine Sperrfunktion bzw. eine Entsperrfunktion aktiviert werden. Ferner kann mit Hilfe des Bedienelements 80c die zweite Bedieneinheit 62f ein- bzw. ausgeschaltet werden.

Mit Hilfe der Bedienelemente 82a, 82b kann eine Trendelenburg-Neigungsbewegung bzw. eine reversible Trendelenburg-Neigungsbewegung der Patientenlagerfläche aktiviert werden. Ferner kann mit Hilfe des Bedienelements 82c eine Auf- bzw. Abwärtsbewegung und eine Neigungsbewegung der Patientenlagerfläche durchgeführt werden.

Mit Hilfe der Bedienelemente 84a, 84b kann eine Aufwärtsbewegung einer Rückenplatte bzw. eine Aufwärtsbewegung einer Beinplatte durchgeführt werden. Ferner kann mit Hilfe der Bedienelemente 84c, 84d eine Abwärtsbewegung der Rückenplatte bzw. eine Abwärtsbewegung der Beinplatte durchgeführt werden. Des Weiteren kann mit Hilfe der Bedienelemente 84e, 84f eine Längsverschiebung der Patientenlagerfläche in zwei entgegengesetzte Richtungen durchgeführt werden.

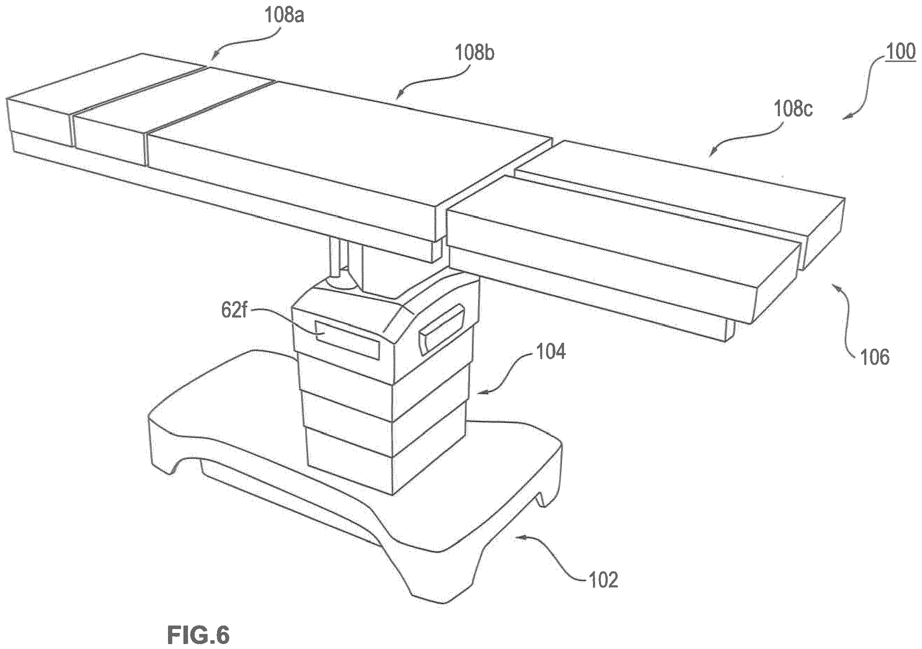

Figur 6 zeigt eine schematische, perspektivische Darstellung eines Operationstisches 100 mit der zweiten Bedieneinheit 62f nach Figur 3 und mehreren mit Hilfe von Aktoren 21 bewegbaren Komponenten 108a bis 108c des Operationstisches 100 gemäß einem Ausführungsbeispiel. Der in Figur 6 gezeigte Operationstisch 100 umfasst insbesondere den Operationstischfuß 102, die Operationstischsäule 104 und die Patientenlagerfläche 106. Dabei ist die Operationstischsäule 104 auf dem Operationstischfuß 102 angeordnet. Ferner ist die Patientenlagerfläche 106 auf der Operationstischsäule 104 angeordnet. Wie in Figur 6 schematisch dargestellt, umfasst die Patientenlagerfläche 106 insbesondere einen Rückenplattenabschnitt mit den bewegbaren Komponenten 108a, einen Basisplattenabschnitt mit der bewegbaren Komponente 108b und einen Beinplattenabschnitt mit den bewegbaren Komponenten 108c. Die in den Operationstischfuß 102 integrierten Aufstandsrollen und die Fahrantriebsrolle, die mit Hilfe der Sensoren 70, 72 detektierbar sind, sind in Figur 6 nicht dargestellt. Insbesondere können die Aufstandsrollen des Operationstischfußes 102 eingefahren werden, damit der Operationstisch 100 stabil steht und sicher operiert werden kann. Dieser Zustand wird insbesondere mit "lock" bezeichnet. Sofern sich die Aufstandsrollen des Operationstischfußes 102 im auch mit "unlock" bezeichneten Zustand befinden, kann der Operationstisch 100 verfahren werden.

Vorzugsweise werden die in Figur 6 gezeigten bewegbaren Komponenten 108a bis 108c mit Hilfe der von der Vorrichtung 10 angesteuerten Aktoren 21 entsprechend bewegt. Ferner kann die Position und/oder die Positionsänderung der bewegbaren Komponenten 108a bis 108c des Operationstisches 100 jeweils mit Hilfe von Sensoren, beispielsweise mit Hilfe des in Figur 3 gezeigten Sensors 28, erfasst und für die Kollisionswarnung verwendet werden.

Bei dem Ausführungsbeispiel von Figur 6 ist die zweite Bedieneinheit 62f in der oberen Säulenverkleidung der Operationstischsäule 104 integriert. Ferner kann die zweite Bedieneinheit 62f auch im Operationstischfuß 102 integriert sein

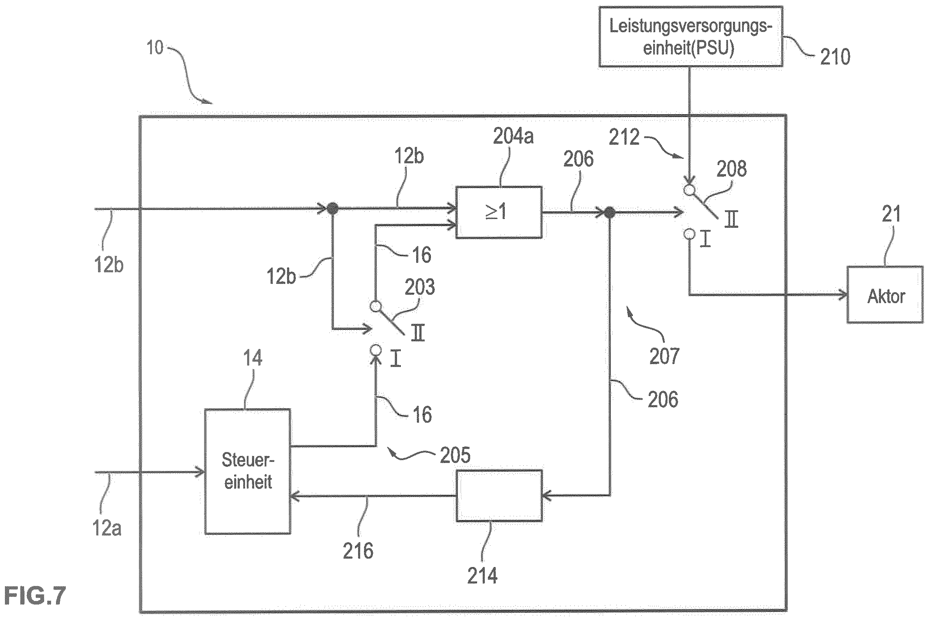

Figur 7 zeigt ein Blockdiagramm einer Vorrichtung 10 zum Ansteuern mindestens eines Aktors 21 eines Operationstisches mit einer Steuereinheit 14 gemäß einem weiteren Ausführungsbeispiel. Das Ausführungsbeispiel von Figur 7 stellt ein alternatives Ausführungsbeispiel zu dem Ausführungsbeispiel von Figur 1 dar. Bei dem in Figur 7 gezeigten Ausführungsbeispiel empfängt die Vorrichtung 10 ein erstes Eingangssteuersignal 12a und ein zweites Eingangssteuersignal 12b und leitet das erste Eingangssteuersignal 12a an die Steuereinheit 14 weiter. Die Steuereinheit 14 dient zur Bereitstellung eines Ausgangssteuersignals 16 basierend auf dem ersten Eingangssteuersignal 12a. Ferner leitet die Vorrichtung 10 das Ausgangssteuersignal 16 an ein Schaltelement 203, wie z.B. einen "Pull-up"-Widerstand, weiter. Das Schaltelement 203 ist ausgebildet, um in einem ersten Schaltzustand (I) das Ausgangssteuersignal 16 an ein erstes Oder-Gatter 204a der Vorrichtung 10 weiterzuleiten und in einem zweiten Schaltzustand (II) die Weiterleitung des Ausgangssteuersignals 16 an das erste Oder-Gatter 204a der Vorrichtung 10 zu unterbrechen. Im Regelfall nimmt das Schaltelement 203 den ersten Schaltzustand (I) ein.

Ferner leitet die Vorrichtung 10 das zweite Eingangssteuersignal 12b an das erste Oder-Gatter 204a und das Schaltelement 203 weiter. Das Schaltelement 203 ist ausgebildet, um in Abhängigkeit des zweiten Eingangssteuersignals 12b von dem ersten Schaltzustand (I) in den zweiten Schaltzustand (II) zu wechseln. In diesem Fall wird der Verbindungspfad 205 zwischen der Steuereinheit 14 und dem ersten Oder-Gatter 204a unterbrochen, d.h. die Steuereinheit 14 wird weggeschaltet.

Ferner ist das erste Oder-Gatter 204a ausgebildet, um basierend auf dem zweiten Eingangssteuer-signal 12b und dem Ausgangssteuersignal 16 ein Oder-verknüpftes Signal 206 zu erzeugen. Die Vorrichtung 10 leitet das Oder-verknüpfte Signal 206 an ein weiteres Schaltelement 208 weiter. Das Schaltelement 208 ist ausgebildet, um in einem ersten Schaltzustand (I) den Aktor 21 über einen Signalpfad 212 mit einer Leistungsversorgungseinheit 210 (PSU) zu koppeln und in einem zweiten Schaltzustand (II) den Signalpfad 212 zwischen der Leistungsversorgungseinheit 210 und dem Aktor 21 zu unterbrechen. Im Regelfall nimmt das Schaltelement 208 den zweiten Schaltzustand (II) ein. Ferner ist das Schaltelement 208 ausgebildet, um in Abhängigkeit des Oder-verknüpften Signals 206 von dem zweiten Schaltzustand (II) in den ersten Schaltzustand (I) zu wechseln, so dass der Aktor 21 mit der Leistungsversorgungseinheit 210 gekoppelt wird. D.h., der Aktor 21 wird mit Energie versorgt und somit freigeschaltet.

Bei dem in Figur 7 gezeigten Ausführungsbeispiel leitet die Vorrichtung 10 das Oder-verknüpfte Signal 206 über einen Rückkopplungspfad 207 zwischen dem ersten Oder-Gatter 204a und der Steuereinheit 14 an einen Signalaufbereiter 214 weiter. Der Signalaufbereiter 214 ist ausgebildet, um basierend auf dem Oder-verknüpften Signal 206 ein modifiziertes Signal 216 zu erzeugen. Vorzugsweise verarbeitet der Signalaufbereiter 214 das Oder-verknüpfte Signal 206 derart, dass das modifizierte Signal 216 von der Steuereinheit 14 lesbar ist.

Wenn der Vorrichtung 10 das erste Eingangssteuersignal 12a über eine mit der Vorrichtung 10 koppelbare erste Bedieneinheit 62a bis 62e zugeführt wird, wird der Verbindungspfad 205 zwischen der Steuereinheit 14 und dem ersten Oder-Gatter 204a nicht unterbrochen, so dass basierend auf dem Ausgangssteuersignal 16 das Oder-verknüpfte Signal 206 erzeugt wird, um den Aktor 21 über den nicht unterbrochenen Signalpfad 212 mit der Leistungsversorgungseinheit 210 zu koppeln. Dadurch wird in diesem Fall eine mit Hilfe des Ausgangssteuersignals 16 durchführbare Ansteuerung des Aktors 21 erreicht. Ferner empfängt in diesem Fall die Vorrichtung 10 das zweite Eingangssteuersignal 12b nicht.

Wenn der Vorrichtung 10 das zweite Eingangssteuersignal 12b über eine mit der Vorrichtung 10 koppelbare zweite Bedieneinheit 62f zugeführt wird, wird der Verbindungspfad 205 zwischen der Steuereinheit 14 und dem ersten Oder-Gatter 204a unterbrochen, so dass nur basierend auf dem zweiten Eingangssteuersignal 12b das Oder-verknüpfte Signal 206 erzeugt wird, um den Aktor 21 über den nicht unterbrochenen Signalpfad 212 mit der Leistungsversorgungseinheit 210 zu koppeln. Dadurch wird in diesem Fall eine mit Hilfe des zweiten Eingangssteuersignals 12b durchführbare Ansteuerung des Aktors 21 erreicht. Ferner wird in diesem Fall die mit Hilfe des Ausgangssteuersignals 16 durchführbare Ansteuerung des Aktors 21 verhindert, selbst wenn die Vorrichtung 10 das erste Eingangssteuersignal 12a empfängt.

Bei dem in Figur 7 gezeigten Ausführungsbeispiel kann die Steuereinheit 14 das über den Rückkopplungspfad 207 zwischen dem ersten Oder-Gatter 204a und der Steuereinheit 14 empfangene modifizierte Signal 216 mitlesen, wenn die Vorrichtung 10 das erste Eingangssteuersignal 12a oder das zweite Eingangssteuersignal 12b empfängt.

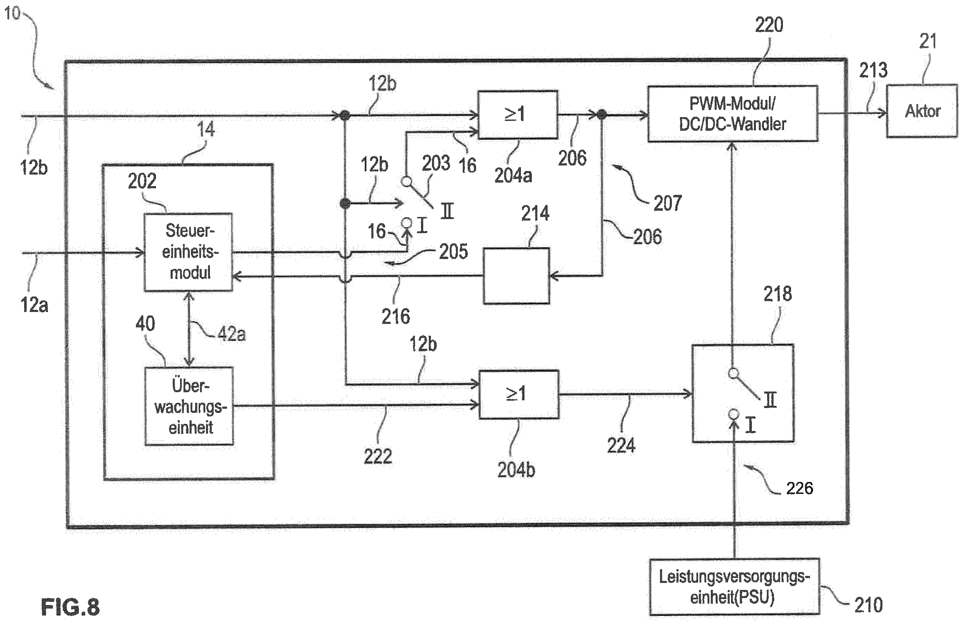

Figur 8 zeigt ein Blockdiagramm einer Vorrichtung 10 zum Ansteuern mindestens eines Aktors 21 eines Operationstisches mit einer Steuereinheit 14 gemäß einem weiteren Ausführungsbeispiel. Das Ausführungsbeispiel von Figur 8 entspricht im Wesentlichen dem Ausführungsbeispiel von Figur 7. Bei dem in Figur 8 gezeigten Ausführungsbeispiel umfasst die Steuereinheit 14 ein Steuereinheitsmodul 202 und eine Überwachungseinheit 40, die über einen Kommunikationspfad 42a miteinander gekoppelt sind. Wie in Figur 8 gezeigt, empfängt die Vorrichtung 10 das erste Eingangssteuersignal 12a und das zweite Eingangssteuersignal 12b und leitet das erste Eingangssteuersignal 12a an das Steuereinheitsmodul 202 weiter. Das Steuereinheitsmodul 202 dient zur Bereitstellung des Ausgangssteuersignals 16 basierend auf dem ersten Eingangssteuersignal 12a. Ferner kann das Steuereinheitsmodul 202 das über den Rückkopplungspfad 207 zwischen dem ersten Oder-Gatter 204a und dem Steuereinheitsmodul 202 empfangene modifizierte Signal 216 mitlesen. Die Überwachungseinheit 40 ist ausgebildet, um in Abhängigkeit einer Information über eine Fehlfunktion des Steuereinheitsmoduls 202 ein Freigabesignal 222 zu erzeugen. Vorzugsweise erzeugt die Überwachungseinheit 40 das Freigabesignal 222 dann, wenn keine Fehlfunktion des Steuereinheitsmoduls 202 vorliegt, während die Überwachungseinheit 40 das Freigabesignal 222 dann nicht erzeugt, wenn eine Fehlfunktion des Steuereinheitsmoduls 202 vorliegt.

Bei dem Ausführungsbeispiel von Figur 8 umfasst die Vorrichtung 10 ferner ein zweites Oder-Gatter 204b. Das zweite Oder-Gatter 204b ist ausgebildet, um basierend auf dem zweiten Eingangssteuer-signal 12b und dem Freigabesignal 222 ein weiteres Oder-verknüpftes Signal 224 zu erzeugen. Die Vorrichtung 10 leitet das Oder-verknüpfte Signal 224 an eine Sicherheitsfreigabeeinheit 218 der Vorrichtung 10 weiter. Die Sicherheitsfreigabeeinheit 218 ist ausgebildet, um in einem ersten Schaltzustand (I) ein PWM-Modul und/oder einen DC/DC-Wandler 220 der Antriebseinheit über einen Verbindungspfad 226 mit einer Leistungsversorgungseinheit (PSU) 210 zu verbinden und in einem zweiten Schaltzustand (II) das PWM-Modul und/oder den DC/DC-Wandler 220 nicht über den Verbindungspfad 226 mit der Leistungsversorgungseinheit 210 zu verbinden. Im Regelfall nimmt die Sicherheitsfreigabeeinheit 218 den zweiten Schaltzustand (II) ein. Ferner ist die Sicherheitsfreigabeeinheit 218 ausgebildet, um in Abhängigkeit des Oder-verknüpften Signal 224 von dem zweiten Schaltzustand (II) in den ersten Schaltzustand (I) zu wechseln. Für den Fall, dass die Sicherheitsfreigabeeinheit 218 den ersten Schaltzustand (I) einnimmt, wird das PWM-Modul und/oder der DC/DC-Wandler 220 über den Verbindungspfad 226 mit Energie versorgt. In diesem Fall erzeugt das PWM-Modul und/oder der DC/DC-Wandler 220 basierend auf dem Oder-verknüpften Signal 206 ein zur Ansteuerung des Aktors 21 geeignetes Signal 213.

Wenn der Vorrichtung 10 das zweite Eingangssteuersignal 12b über die mit der Vorrichtung 10 koppelbare zweite Bedieneinheit 62f zugeführt wird, wird die Sicherheitsfreigabeeinheit 218 mit Hilfe des Oder-verknüpften Signals 224 in den ersten Schaltzustand (I) gebracht, so dass das PWM-Modul und/oder der DC/DC-Wandler 220 über den nicht unterbrochenen Verbindungspfad 226 mit der Leistungsversorgungseinheit 210 gekoppelt ist, um den Aktor 21 mit Hilfe des Oder-verknüpften Signals 206 anzusteuern. Dies erfolgt insbesondere unabhängig davon, ob die Vorrichtung 10 das erste Eingangssteuersignal 12a empfängt.

Wenn die Überwachungseinheit 40 das Freigabesignal 222 erzeugt, d.h. wenn keine Fehlfunktion des Steuereinheitsmoduls 202 vorliegt, kann die Sicherheitsfreigabeeinheit 218 mit Hilfe des Oder-verknüpften Signals 224 wiederum in den ersten Schaltzustand (I) gebracht werden, so dass das PWM-Modul und/oder der DC/DC-Wandler 220 über den nicht unterbrochenen Verbindungspfad 226 mit der Leistungsversorgungseinheit 210 gekoppelt ist, um den Aktor 21 mit Hilfe des Oder-verknüpften Signals 206 anzusteuern. Dadurch wird insbesondere erreicht, dass die mit Hilfe des ersten Eingangssteuersignals 12a durchführbare Ansteuerung des Aktors 21 kurzzeitig freigegeben werden kann.

Mit Hilfe der vorliegenden Erfindung kann eine hohe Verfügbarkeit des Operationstisches 100 erreicht werden, da die Bedienung des Operationstisches 100 auch bei einer Fehlfunktion der Steuereinheit 14 bzw. des Steuereinheitsmoduls 202 über die Override-Bedieneinheit 62f durchgeführt werden kann. Dabei gibt es insbesondere die Möglichkeit, dass der Benutzer gewarnt bzw. informiert werden kann, wie z.B. mit Hilfe der Kollisionsüberwachung oder einer Diagnose der Override-Funktionalität. Ferner hat die vorliegende Erfindung den Vorteil, dass eine Kommunikation zwischen der Override-Bedieneinheit 62f und der Steuereinheit 14 möglich ist. Dies dient beispielsweise zur Aktivierung von Zusatzfunktionen der Vorrichtung 10, wie z.B. die Warnung vor einer Kippgefahr oder das Erfassen von "Life-Cycle"-Daten.

Bei dem hydraulisch gesteuerten Operationstisch 100 nach Figur 6 können zur Bedienung der zweiten Bedieneinheit 62f insbesondere zwei Bedienelemente betätigt werden, vorzugsweise das Bedienelement 80c zum Einschalten der Hydraulikpumpe 21c und eines der Bedienelemente 80a, 80b, 82a bis 82c und 84a bis 84f zum Aktivieren einer Bedienfunktion, wie z.B. zum Schließen bzw. Öffnen des Hydraulikventils 21b.

Gemäß Ausführungsbeispielen erfolgt die Steuerung des Operationstisches 100 über eine auf der Überwachungseinheit 40 basierende "master/slave"-Architektur als Sicherheitsmaßnahme. Dabei umfasst die Sicherheitsfreigabeeinheit 24 insbesondere die erste Sperreinheit 26a, mit deren Hilfe die Überwachungseinheit 40 eine Notabschaltung bei einer Fehlfunktion der Steuereinheit 14 bewirken kann.

Die zweite Bedieneinheit 62f wird vorzugsweise dann genutzt, wenn die Steuereinheit 14 defekt ist, oder wenn eine Hand-Bedieneinheit, insbesondere die kabelgebundene Hand-Bedieneinheit 62a, defekt ist. Ferner kann die zweite Bedieneinheit 62f auch dann benutzt werden, wenn eine drahtlose Hand-Bedieneinheit, insbesondere die IR-Fernsteuerungs-Bedieneinheit 62b, defekt ist.

Die vorliegende Erfindung hat gegenüber dem Stand der Technik insbesondere die folgenden Vorteile. Die Steuereinheit 14 kann das zweite Eingangssteuersignal 12b der zweiten Bedieneinheit 62f mitlesen und somit insbesondere die Kollisionsüberwachung durchführen. Wenn jedoch die Kollision einer bewegbaren Komponente des Operationstisches 100 mit Hilfe der Steuereinheit 14 erkannt wird, erfolgt keine Unterbrechung der mit Hilfe des zweiten Eingangssteuersignals 12b durchgeführten unmittelbaren Ansteuerung der Antriebseinheit 20 bzw. des Aktors 21, sondern die Steuereinheit 14 erzeugt vorzugsweise nur das Warnsignal 18a zur Ausgabe einer Kollisionswarnung an den Benutzer, insbesondere ein optisches oder akustisches Warnsignal. Dadurch wird erreicht, dass bei einer Fehlfunktion der Steuereinheit 14 im Gegensatz zu der mit Hilfe des Ausgangssteuersignals 16 der Steuereinheit 14 durchführbaren Ansteuerung des Aktors 21 die mit Hilfe des zweiten Eingangssteuersignals 12b durchgeführte unmittelbare Ansteuerung des Aktors 21 weiterhin möglich ist.

Die vorliegende Erfindung ermöglicht insbesondere eine unmittelbare Ansteuerung des Aktors 21, ohne dass der Mikrocontroller der Steuereinheit 14 diese unmittelbare Ansteuerung des Aktors 21 unterbrechen kann. Dies ist insbesondere auch bei einem Ausfall oder einer Fehlfunktion des Mikrocontrollers der Steuereinheit 14 der Fall. Vorzugsweise wird dabei vorausgesetzt, dass die zweite Sperreinheit 26b der Sicherheitsfreigabeeinheit 24 irgendwann beim Hochfahren der Vorrichtung 10 in den ersten Schaltzustand geschaltet wurde.

Auch ermöglicht die vorliegende Erfindung das Mitlesen des zweiten Eingangssteuersignals 12b der zweiten Bedieneinheit 62f mit Hilfe der Steuereinheit 14, insbesondere dann, wenn die Steuereinheit 14 aktiv ist. Somit kann gemäß Ausführungsbeispielen die Kollisionsüberwachung und gegebenenfalls die Kollisionswarnung des Benutzers vor einer drohenden oder unmittelbar bevorstehenden Kollision der bewegbaren Komponente des Operationstisches 100 durchgeführt werden.

### Bezugszeichenliste

- 1, 2, 17a, 17b, 38, 52: Signalpfad
- 3: Kommunikationsverbindung
- 10: Vorrichtung
- 12a, 12b: Eingangssteuersignal
- 14: Steuereinheit
- 16: Ausgangssteuersignal
- 18a, 18b: Warnsignal
- 20: Antriebseinrichtung
- 21: Aktor
- 21a: Elektromotor
- 21b: Ventil
- 21c: Hydraulikpumpe
- 22: Sperrsignal
- 24, 218: Sicherheitsfreigabeeinheit
- 26a, 26b: Sperreinheit
- 28, 28a bis 28e: Sensor
- 30: Sensorsignal
- 32: LED-Anzeige
- 34: akustischer Alarmgeber
- 36, 210: Leistungsversorgungseinheit
- 36a bis 36d: Komponenten der Leistungsversorgungseinheit
- 40: Überwachungseinheit
- 42a bis 42c: Kommunikationspfad
- 44: Busschnittstelle
- 46: nichtflüchtiger Speicher
- 48: Lebenszeichen-Modul
- 50: Servicemodul-Vorrichtung
- 56a, 64a, 64b: Schnittstelle
- 56b bis 56d: Eingangsknoten
- 58a bis 58c: Ausgangsknoten
- 60: Busknoten
- 62a bis 62e: erste Bedieneinheit
- 62f: zweite Bedieneinheit
- 63: Gruppe von ersten Bedieneinheiten
- 66: Verdrahtungspunkt
- 68: Fahrantriebsmotor
- 70: Sensor für Aufstandsrollen
- 72: Sensor für Fahrantriebsrolle
- 74 bis 78: Bedienfelder
- 80a bis 80c, 82a bis 82c,84a bis 84f: Bedienelemente
- 100: Operationstisch
- 102 bis 106, 108a bis 108c: Komponenten des Operationstisches
- 202: Steuereinheitsmodul
- 203, 208: Schaltelement
- 204a, 204b: Oder-Gatter
- 205, 212, 226: Verbindungspfad
- 206, 224: Oder-verknüpftes Signal
- 207: Rückkopplungspfad
- 214: Signalaufbereiter
- 216: Modifiziertes Signal
- 220: PWM-Modul bzw. DC/DC-Wandler
- 222: Freigabesignal

## Patentansprüche

1. Vorrichtung (10) zum Ansteuern mindestens einer Antriebseinrichtung (20) eines Operationstisches (100),
mit einer Steuereinheit (14) zum Bereitstellen eines Ausgangssteuersignals (16) basierend auf zumindest einem ersten Eingangssteuersignal (12a),
wobei die Vorrichtung (10) derart ausgebildet ist, dass die Antriebseinrichtung (20) mit Hilfe des Ausgangssteuersignals (16) ansteuerbar ist, und dass die Antriebseinrichtung (20) mit Hilfe eines zweiten Eingangssteuersignals (12b) unmittelbar ansteuerbar ist, **dadurch gekennzeichnet,**
**dass** die Steuereinheit (14) das zweite Eingangssteuersignal (12b) oder ein auf dem zweiten Eingangssteuersignal (12b) basierendes Signal (216) empfängt.

2. Vorrichtung (10) nach Anspruch 1, **dadurch gekennzeichnet, dass** die Antriebseinrichtung (20) mit Hilfe des zweiten Eingangssteuersignals (12b) unmittelbar ansteuerbar ist, indem die Vorrichtung (10) die Antriebseinrichtung (20) mit Hilfe des zweiten Eingangssteuersignals (12b) unter Umgehung der Steuereinheit (14) ansteuert.

3. Vorrichtung (10) nach Anspruch 1 oder 2, **dadurch gekennzeichnet, dass** die Vorrichtung (10) bei einer Fehlfunktion der Steuereinheit (14) die mit Hilfe des Ausgangssteuersignals (16) durchgeführte Ansteuerung der Antriebseinrichtung (20) unterbricht.

4. Vorrichtung (10) nach einem der Ansprüche 1 bis 3, **dadurch gekennzeichnet, dass** die Vorrichtung (10) bei einer Fehlfunktion der Steuereinheit (14) die mit Hilfe des zweiten Eingangssteuersignals (12b) durchgeführte unmittelbare Ansteuerung der Antriebseinrichtung (20) nicht unterbricht.

5. Vorrichtung (10) nach einem der Ansprüche 1 bis 4, **dadurch gekennzeichnet, dass** die Steuereinheit (14) ausgebildet ist, um basierend auf dem ersten Eingangssteuersignal (12a) und basierend auf dem zweiten Eingangssteuersignal (12b) jeweils eine Kollisionsüberwachung einer mit Hilfe der Antriebseinrichtung (20) bewegbaren Komponente (108a bis 108c) des Operationstisches (100) mit einer anderen Komponente des Operationstisches (100) oder der Umgebung durchzuführen.

6. Vorrichtung (10) nach Anspruch 5, **dadurch gekennzeichnet, dass** die Steuereinheit (14) ausgebildet ist, um bei der durchgeführten Kollisionsüberwachung mindestens ein erstes Warnsignal (18a) zu erzeugen, wenn bei der Ansteuerung der Antriebseinrichtung (20) ein Mindestabstand einer mit Hilfe der Antriebseinrichtung (20) bewegbaren Komponente (108a bis 108c) des Operationstisches (100) zu einer anderen Komponente des Operationstisches (100) oder zu der Umgebung erreicht oder unterschritten wird.

7. Vorrichtung (10) nach Anspruch 5 oder 6, **dadurch gekennzeichnet, dass** die Steuereinheit (14) ausgebildet ist, um bei der durchgeführten Kollisionsüberwachung zu überprüfen, ob bei der Ansteuerung der Antriebseinrichtung (20) eine einzustellende Positionsänderung einer mit Hilfe der Antriebseinrichtung (20) bewegbaren Komponente (108a bis 108c) des Operationstisches (100) relativ zu einer Position einer anderen Komponente des Operationstisches (100) zulässig oder nicht zulässig ist, und in Abhängigkeit des Ergebnisses dieser Überprüfung mindestens ein erstes Warnsignal (18a) zu erzeugen.

8. Vorrichtung (10) nach Anspruch 6 oder 7, **dadurch gekennzeichnet, dass** das erste Warnsignal (18a) ein optisches oder ein akustisches Warnsignal ist.

9. Vorrichtung (10) nach einem der Ansprüche 5 bis 8, **dadurch gekennzeichnet, dass** die Steuereinheit (14) ausgebildet ist, um bei der durchgeführten Kollisionsüberwachung ein Sperrsignal (22) für eine Sicherheitsfreigabeeinheit (24) zu erzeugen, wenn bei der Ansteuerung der Antriebseinrichtung (20) ein Mindestabstand einer mit Hilfe der Antriebseinrichtung (20) bewegbaren Komponente (108a bis 108c) des Operationstisches (100) zu einer anderen Komponente des Operationstisches (100) oder zu der Umgebung erreicht oder unterschritten wird, wobei die mit Hilfe des zweiten Eingangssteuersignals (12b) durchgeführte unmittelbare Ansteuerung der Antriebseinrichtung (20) weiterhin möglich ist.

10. Vorrichtung (10) nach einem der Ansprüche 5 bis 9, **dadurch gekennzeichnet, dass** die Steuereinheit (14) ausgebildet ist, um bei der durchgeführten Kollisionsüberwachung mindestens ein Sensorsignal (30) zu empfangen, wobei das Sensorsignal (30) jeweils eine Position und/oder eine Positionsänderung einer mit Hilfe der Antriebseinrichtung (20) bewegbaren Komponente (108a bis 108c) des Operationstisches (100) angibt.

11. Vorrichtung (10) nach einem der Ansprüche 1 bis 10, **dadurch gekennzeichnet, dass** die Sicherheitsfreigabeeinheit (24) eine erste Sperreinheit (26a) zum Sperren des Ausgangssteuersignals (16) in Abhängigkeit eines von der Steuereinheit (14) erzeugten Sperrsignals (22) umfasst, wobei die erste Sperreinheit (26a) vorzugsweise ausgebildet ist, um in einem ersten Schaltzustand das Ausgangssteuersignal (16) an die Antriebseinrichtung (20) weiterzuleiten und in einem zweiten Schaltzustand die Weiterleitung des Ausgangssteuersignals (16) zu unterbrechen.

12. Vorrichtung (10) nach Anspruch 10 oder 11, dass die Sicherheitsfreigabeeinheit (24) eine zweite Sperreinheit (26b) zum Sperren des zweiten Eingangssteuersignals umfasst, dass die zweite Sperreinheit (26b) ausgebildet ist, um in einem ersten Schaltzustand das zweite Eingangssteuersignal (12b) an die Antriebseinrichtung (20) weiterzuleiten und in einem zweiten Schaltzustand die Weiterleitung des zweiten Eingangssteuersignals (12b) zu unterbrechen, und dass die zweite Sperreinheit (26b)nach dem Hochfahren der Vorrichtung in den ersten Schaltzustand geschaltet wird und auch bei einer Fehlfunktion der Steuereinheit (14) in diesem ersten Schaltzustand verbleibt.

13. Vorrichtung (10) nach einem der Ansprüche 1 bis 12, **dadurch gekennzeichnet, dass** der Vorrichtung (10) das erste Eingangssteuersignal (12a) über eine mit der Vorrichtung (10) koppelbare erste Bedieneinheit (62a bis 62e) zuführbar ist, und dass der Vorrichtung (10) das zweite Eingangssteuersignal (12b) über eine mit der Vorrichtung (10) koppelbare zweite Bedieneinheit (62f) zuführbar ist.

14. Vorrichtung (10) nach einem der Ansprüche 1 bis 13, **dadurch gekennzeichnet, dass** die Vorrichtung (10) derart ausgebildet ist, dass das zweite Eingangssteuersignal (12b) Vorrang vor dem ersten Eingangssteuersignal (12a) hat.

15. Verfahren zum Ansteuern mindestens einer Antriebseinrichtung (20) eines Operationstisches (100),
bei dem ein Ausgangssteuersignal (16) basierend auf zumindest einem ersten Eingangssteuersignal (12a) mit Hilfe einer Steuereinheit (14) bereitgestellt wird,
bei dem die Antriebseinrichtung (20) mit Hilfe des Ausgangssteuersignals (16) angesteuert wird, und
bei dem die Antriebseinrichtung (20) mit Hilfe eines zweiten Eingangssteuersignals (12b) unmittelbar angesteuert wird, **dadurch gekennzeichnet,**
**dass** die Steuereinheit (14) das zweite Eingangssteuersignal (12b) oder ein auf dem zweiten Eingangssteuersignal (12b) basierendes Signal (216) empfängt.

## Claims

1. A device (10) for controlling at least one drive mechanism (20) of an operating table (100), with a control unit (14) for supplying an output control signal (16) based on at least one first input control signal (12a), wherein the device (10) is designed such that the drive mechanism (20) can be controlled via the output control signal (16) and that the drive mechanism (20) can be directly controlled via a second input control signal (12b), **characterized in that** the control unit (14) receives the second input control signal (12b) or a signal (216) based on the second input control signal (12b).

2. The device (10) according to Claim 1, **characterized in that** the drive mechanism (20) can be directly controlled via the second input control signal (12b), whereby the device (10) controls the drive mechanism (20) via the second input control signal (12b) while bypassing the control unit (14).

3. The device (10) according to Claim 1 or 2, **characterized in that**, in case of malfunctioning of the control unit (14), the device (10) interrupts the control of the drive mechanism (20) conducted via the output control signal (16).

4. The device (10) according to one of Claims 1 to 3, **characterized in that**, in case of malfunctioning of the control unit (14), the device (10) does not interrupt the direct control of the drive mechanism (20) conducted via the second input control signal (12b).

5. The device (10) according to one of Claims 1 to 4, **characterized in that** the control unit (14) is designed to monitor for collisions between a component (108a to 108c) of the operating table (100), said component being moveable via the drive mechanism (20), and another component of the operating table (100) or its surroundings, said monitoring being conducted based on the first input control signal (12a) and based on the second input control signal (12b).

6. The device (10) according to Claim 5, **characterized in that** the control unit (14) is designed to generate at least one first warning signal (18a) while monitoring for collisions, if during the control of the drive mechanism (20) a distance between a component (108a to 108c) of the operating table (100), said component being moveable via the drive mechanism (20), and another component of the operating table (100) or its surroundings reaches or falls below a certain minimum threshold.

7. The device (10) according to Claim 5 or 6, **characterized in that** the control unit (14) is designed to review while monitoring for collisions whether an adjustable change in position of a component (108a to 108c) of the operating table (100), said component being moveable via the drive mechanism (20), relative to the position of another component of the operating table (100), said change in position to be specified via the control of the drive mechanism (20), is permissible or impermissible, and to generate at least one first warning signal (18a) depending on the result of this review.

8. The device (10) according to Claim 6 or 7, **characterized in that** the first warning signal (18a) is an optical or acoustic warning signal.

9. The device (10) according to one of Claims 5 to 8, **characterized in that** the control unit (14) is designed to generate an inhibit signal (22) for a safety release unit (24) while monitoring for collisions, if during the control of the drive mechanism (20) a distance between a component (108a to 108c) of the operating table (100), said component being moveable via the drive mechanism (20), and another component of the operating table (100) or its surroundings reaches or falls below a certain minimum threshold, wherein the control of the drive mechanism (20) conducted via the second input control signal (12b) continues to be possible.

10. The device (10) according to one of Claims 5 to 9, **characterized in that** the control unit (14) is designed to receive at least one sensor signal (30) while monitoring for collisions, wherein the sensor signal (30) indicates a position and/or a change in position of a component (108a to 108c) of the operating table (100), said component being moveable via the drive mechanism (20).

11. The device (10) according to one of Claims 1 to 10, **characterized in that** the safety release unit (24) comprises a first locking unit (26a) for inhibiting the output control signal (16) depending on an inhibit signal (22) generated by the control unit (14), wherein the first locking unit (26a) preferably is designed such that it transmits the output control signal (16) to the drive mechanism (20) in a first switching state and that it interrupts the transmission of the output control signal (16) in a second switching state.

12. The device (10) according to one of Claims 10 or 11, **characterized in that** the safety release unit (24) comprises a second locking unit (26b) for inhibiting the second input control signal, that the second locking unit (26b) is designed to transmit the second input control signal (12b) to the drive mechanism (20) in a first switching state and to interrupt the transmission of the second input control signal (12b) in a second switching state, and that the second locking unit (26b) is switched to the first switching state following the starting up of the device, remaining in this first switching state even in case of malfunction of the control unit (14).

13. The device (10) according to one of Claims 1 to 12, **characterized in that** the first input control signal (12a) can be fed to the device (10) via a first operating unit (62a to 62e) capable of being linked with the device (10), and that the second input control signal (12b) can be fed to the device (10) via a second operating unit (62f) capable of being linked with the device (10).

14. The device (10) according to one of Claims 1 to 13, **characterized in that** the device (10) is designed such that the second input control signal (12b) has priority over the first input control signal (12a).

15. A method for controlling at least one drive mechanism (20) of an operating table (100), wherein an output control signal (16) is provided based on at least one first input control signal (12a) via a control unit (14), wherein the drive mechanism (20) is controlled via the output control signal (16), and wherein the drive mechanism (20) is directly controlled via a second input control signal (12b), **characterized in that** the control unit (14) receives the second input control signal (12b) or a signal (216) based on the second input control signal (12b).

## Revendications

1. Dispositif (10) de commande d'au moins un système d'entraînement (20) d'une table d'opération (100),
avec une unité de commande (14) pour la fourniture d'un signal de commande de sortie (16) sur la base d'au moins un premier signal de commande d'entrée (12a),
dans lequel le dispositif (10) est réalisé de telle sorte que le système d'entraînement (20) peut être commandé à l'aide du signal de commande de sortie (16), et que le système d'entraînement (20) peut être commandé directement à l'aide d'un deuxième signal de commande d'entrée (12b), **caractérisé en ce**
**que** l'unité de commande (14) reçoit le deuxième signal de commande d'entrée (12b) ou un signal (216) se basant sur le deuxième signal de commande d'entrée (12b).

2. Dispositif (10) selon la revendication 1, **caractérisé en ce que** le système d'entraînement (20) peut être commandé directement à l'aide du deuxième signal de commande d'entrée (12b), par le fait que le dispositif (10) commande le système d'entraînement (20) à l'aide du deuxième signal de commande d'entrée (12b) en contournant l'unité de commande (14).

3. Dispositif (10) selon la revendication 1 ou 2, **caractérisé en ce que** le dispositif (10) interrompt, en cas de dysfonctionnement de l'unité de commande (14), la commande du système d'entraînement (20) effectuée à l'aide du signal de commande de sortie (16).

4. Dispositif (10) selon l'une quelconque des revendications 1 à 3, **caractérisé en ce que** le dispositif (10) n'interrompt pas, en cas de dysfonctionnement de l'unité de commande (14), la commande directe du système d'entraînement (20) effectuée à l'aide du deuxième signal de commande d'entrée (12b).

5. Dispositif (10) selon l'une quelconque des revendications 1 à 4, **caractérisé en ce que** l'unité de commande (14) est réalisée pour effectuer sur la base du premier signal de commande d'entrée (12a) et sur la base du deuxième signal de commande d'entrée (12b), respectivement une surveillance de collision d'un composant (108a à 108c) mobile à l'aide du système d'entraînement (20) de la table d'opération (100) avec un autre composant de la table d'opération (100) ou de l'environnement.

6. Dispositif (10) selon la revendication 5, **caractérisé en ce que** l'unité de commande (14) est réalisée pour générer, lors de la surveillance de collision effectuée, au moins un premier signal d'avertissement (18a), lorsque lors de la commande du système d'entraînement (20), une distance minimum entre un composant (108a à 108c) mobile à l'aide du système d'entraînement (20) de la table d'opération (100) et un autre composant de la table d'opération (100) ou l'environnement est atteinte ou sous-dépassée.

7. Dispositif (10) selon la revendication 5 ou 6, **caractérisé en ce que** l'unité de commande (14) est réalisée pour vérifier, lors de la surveillance de collision effectuée, si lors de la commande du système d'entraînement (20), un changement de position à régler d'un composant (108a à 108c) mobile à l'aide du système d'entraînement (20) de la table d'opération (100) par rapport à une position d'un autre composant de la table d'opération (100) est admissible ou non admissible, et en fonction du résultat de cette vérification pour générer au moins un premier signal d'avertissement (18a).

8. Dispositif (10) selon la revendication 6 ou 7, **caractérisé en ce que** le premier signal d'avertissement (18a) est un signal d'avertissement optique ou un signal d'avertissement acoustique.

9. Dispositif (10) selon l'une quelconque des revendications 5 à 8, **caractérisé en ce que** l'unité de commande (14) est réalisée pour générer, lors de la surveillance de collision effectuée, un signal de blocage (22) pour une unité de libération de sécurité (24), lorsque lors de la commande du système de commande (20), une distance minimum entre un composant (108a à 108c) mobile à l'aide du système d'entraînement (20) de la table d'opération (100) et un autre composant de la table d'opération (100) ou l'environnement est atteinte ou sous-dépassée, dans lequel la commande directe du système d'entraînement (20) effectuée à l'aide du deuxième signal de commande d'entrée (12b) continue d'être possible.

10. Dispositif (10) selon l'une quelconque des revendications 5 à 9, **caractérisé en ce que** l'unité de commande (14) est réalisée pour recevoir, lors de la surveillance de collision effectuée, au moins un signal de capteur (30), dans lequel le signal de capteur (30) indique respectivement une position et/ou un changement de position d'un composant (108a à 108c) mobile à l'aide du système d'entraînement (20) de la table d'opération (100).

11. Dispositif (10) selon l'une quelconque des revendications 1 à 10, **caractérisé en ce que** l'unité de libération de sécurité (24) comprend une première unité de blocage (26a) pour le blocage du signal de commande de sortie (16) en fonction d'un signal de blocage (22) généré par l'unité de commande (14), dans lequel la première unité de blocage (26a) est réalisée de préférence pour transmettre dans un premier état de commutation le signal de commande de sortie (16) au système d'entraînement (20) et interrompre dans un deuxième état de commutation la transmission du signal de commande de sortie (16).

12. Dispositif (10) selon la revendication 10 ou 11, que l'unité de libération de sécurité (24) comprend une deuxième unité de blocage (26b) pour le blocage du deuxième signal de commande d'entrée, que la deuxième unité de blocage (26b) est réalisée pour transmettre dans un premier état de commutation le deuxième signal de commande d'entrée (12b) au système d'entraînement (20) et interrompre dans un deuxième état de commutation la transmission du deuxième signal de commande d'entrée (12b), et que la deuxième unité de blocage (26b) est commutée après le démarrage du dispositif dans le premier état de commutation et reste aussi en cas de dysfonctionnement de l'unité de commande (14) dans ce premier état de commutation.

13. Dispositif (10) selon l'une quelconque des revendications 1 à 12, **caractérisé en ce que** le premier signal de commande d'entrée (12a) peut être amené au dispositif (10) par le biais d'une première unité de commande (62a à 62e) pouvant être couplée au dispositif (10), et que le deuxième signal de commande d'entrée (12b) peut être amené au dispositif (10) par le biais d'une deuxième unité de commande (62f) pouvant être couplée au dispositif (10).

14. Dispositif (10) selon l'une quelconque des revendications 1 à 13, **caractérisé en ce que** le dispositif (10) est réalisé de telle sorte que le deuxième signal de commande d'entrée (12b) est prioritaire sur le premier signal de commande d'entrée (12a).

15. Procédé de commande d'au moins un système d'entraînement (20) d'une table d'opération (100),
dans lequel un signal de commande sortie (16) est fourni sur la base d'au moins un premier signal de commande d'entrée (12a) à l'aide d'une unité de commande (14),
dans lequel le système d'entraînement (20) est commandé à l'aide du signal de commande sortie (16), et
dans lequel le système d'entraînement (20) est commandé directement à l'aide d'un deuxième signal de commande d'entrée (12b), **caractérisé en ce**
**que** l'unité de commande (14) reçoit le deuxième signal de de commande d'entrée (12b) ou un signal (216) basé sur le deuxième signal de commande d'entrée (12b).
